# EUROPÄISCHE PATENTSCHRIFT

(11) **EP 4 450 948 B1**
(45) Veröffentlichungstag und Bekanntmachung des Hinweises auf die Patenterteilung: **29.10.2025**
(21) Anmeldenummer: 23168446.5
(22) Anmeldetag: 18.04.2023
(51) Int. Cl.: G01M 17/007, G01M 7/02

(54) **VERFAHREN UND VORRICHTUNG ZUR BESTIMMUNG DER FAHRSTABILITÄT EINES ZWEIRADES**
METHOD AND DEVICE FOR DETERMINING THE DRIVING STABILITY OF A TWO-WHEELED VEHICLE
PROCÉDÉ ET DISPOSITIF DE DÉTERMINATION DE LA STABILITÉ DE CONDUITE D'UN DEUX ROUES

(43) Veröffentlichungstag der Anmeldung: 23.10.2024
(73) Patentinhaber: Kalkhoff Werke GmbH, 49685 Emstek (DE)
(72) Erfinder: Fischer, Kai, 28205 Bremen (DE)
(74) Vertreter: Jabbusch, Matthias

(56) Entgegenhaltungen:
- WO-A1-2018/033958
- JP-A- H06 294 710

## Beschreibung

Die Erfindung betrifft ein Verfahren zur Bestimmung der Fahrstabilität eines Zweirades, insbesondere eines Fahrrades, insbesondere zur Bestimmung der Möglichkeit des Auftretens von Lenkerflattern bei dem Zweirad, wobei das Zweirad mindestens ein Steuerrohr aufweist, durch das die Lenkachse des Vorderrades verläuft. Weiterhin betrifft die Erfindung eine Vorrichtung zur Bestimmung der Fahrstabilität eines Zweirades, insbesondere zur Bestimmung der Möglichkeit des Auftretens von Lenkerflattern bei dem Zweirad, wobei das Zweirad mindestens ein Steuerrohr aufweist, durch das die Lenkachse des Vorderrades verläuft.

Das Lenkerflattern, also die seitliche Schwingung am Steuerrohr, kann schon durch geringe Anregung beim Fahren von Zweirädern, insbesondere von Fahrrädern, ausgelöst werden. Dieser Flattereffekt wird auch *shimmy* genannt. Die Schwingungen der Vordergabeln können sich selbst verstärken, insbesondere im Bereich der Eigenfrequenz des gesamten Rades und sich aufschaukeln, so dass es zu einem Pendeln des Lenkers kommen kann. Der Flattereffekt hängt in erster Linie vom Zweiradrahmen, insbesondere vom Zweiradrahmen, und seiner Geometrie ab. Der Luftdruck des Reifens und die gyroskopischen Effekte des Vorderrades machen den Flattereffekt weitgehend geschwindigkeitsabhängig. Der Flattereffekt kann nicht durch Einstellungen behoben werden, da der Effekt von der Rahmengeometrie und der Elastizität der Komponenten abhängt.

Da der Effekt von vielen Faktoren abhängt, ist eine Vorhersage, insbesondere in der Entwicklungsphase des Fahrrades, äußerst schwierig.

Beispielsweise ist in der JP H06 294710 A ein Verfahren zur Erfassung von Vibrationen eines Lenkrades oder der Fahrzeugkarosserie, die während der Fahrt auftreten können, vorgeschlagen. Hierbei sind den Reifen des Fahrzeuges Rotationssensoren und dem Lenkrad ein Beschleunigungssensor zugeordnet.

Weiterhin ist in der WO 2018/033958 A1 ist eine Lastaufbringungsvorrichtung vorgeschlagen, mit der auf ein Fahrzeug mit Sattelaufhängung eine Last aufgebracht werden soll, die in etwa der Last eines menschlichen Körpers entspricht. Hierzu ist ein Gewicht, das eine Last auf eine Sattelstütze ausübt, sowie ein Stoßdämpfer vorgesehen, der zwischen der Sattelstütze und dem Gewicht angeordnet ist.

Der Erfindung liegt die Aufgabe zugrunde, ein Verfahren und eine Vorrichtung vorzuschlagen, mit denen Aussagen über die Fahrstabilität, insbesondere über die Flatterneigung des Fahrrades, getroffen werden können.

Die Lösung dieser Aufgabe erfolgt mit einem Verfahren mit den Merkmalen des Patentanspruchs 1 sowie mit einer Vorrichtung mit den Merkmalen des Patentanspruchs 11. Weiterbildungen und vorteilhafte Ausgestaltungen sind in den Unteransprüchen angegeben.

Bei einem Verfahren zur Bestimmung der Fahrstabilität eines Zweirades, insbesondere eines Fahrrades, insbesondere zur Bestimmung der Möglichkeit des Auftretens von Lenkerflattern bei dem Zweirad, wobei das Zweirad mindestens ein Steuerrohr aufweist, durch das die Lenkachse des Vorderrades verläuft, ist erfindungswesentlich vorgesehen, dass das Steuerrohr des Zweirades mit Anregungsfrequenzen eines Anregungsfrequenzbereiches zu Schwingungen angeregt wird, dass eine zur Anregung des Zweirades benötigte Kraft in Abhängigkeit von der jeweiligen Anregungsfrequenz erfasst wird, dass eine jeweilige Schwingungsantwort des Zweirades in Form mindestens eines Beschleunigungssignals in Abhängigkeit von der jeweiligen Anregungsfrequenz an mindestens einem Bereich des Zweirades erfasst wird, dass aus den erfassten Beschleunigungssignalen und der zur Anregung des Zweirades benötigten Kraft auf die Akzeleranz bei der jeweiligen Anregungsfrequenz geschlossen wird, dass mindestens eine Resonanzfrequenz des Zweirades ermittelt wird und dass aus der mindesten einen Resonanzfrequenz und der zugehörigen Akzeleranz auf die Fahrstabilität des Zweirades geschlossen wird.

Typischerweise weist ein Zweirad, insbesondere ein Fahrrad ein gelenktes Vorderrad und ein Hinterrad auf, wobei das Vorderrad in einer Gabel aufgenommen ist, deren Gabelschaft durch das Steuerrohr geführt ist. Oberhalb des Steuerrohres ist der Lenker angeordnet. Der Fahrradrahmen kann verschiedene Geometrien und Anordnungen von Rahmenrohren aufweisen. Um Aussagen über die Fahrstabilität, insbesondere über die Möglichkeit, dass ein Lenkerflattern auftritt, treffen zu können, wird das Zweirad zu Schwingungen angeregt. Das Zweirad wird mit einer Vibrationsvorrichtung, beispielsweise mit einem *Shaker* oder einem Exzenter zu Schwingungen angeregt. Hierbei kann das Zweirad mit Schwingungen verschiedener Anregungsfrequenzen angeregt werden. Hierzu weist die Vibrationsvorrichtung eine schwingungsleitende Verbindung zu dem Zweirad, insbesondere zu dem Steuerrohr des Zweirades auf. Die schwingungsleitende Verbindung kann beispielweise über ein Gestänge, beispielsweise eine Stößelstange oder Ähnliches ausgebildet sein. An der schwingungsübertragenden Verbindung wird ebenfalls die Kraft erfasst, die zur Anregung des Zweirades zu Schwingungen benötigt wird. Hierzu kann eine Krafterfassungsvorrichtung, beispielsweise eine Kraftmessdose, eingesetzt werden. Die Schwingungsantwort des Zweirades wird in Form mindestens eines Beschleunigungssignals erfasst. Hierzu können Beschleunigungssensoren, beispielsweise piezoelektrische Sensoren, zum Einsatz kommen. Die Beschleunigungssensoren können an verschiedenen Bereichen des Zweirades, beispielsweise am Steuerrohr, am Gepäckträger oder auch am Lenker positioniert werden. Die Schwingungsantworten des Zweirades in Form von Beschleunigungssignalen werden in Abhängigkeit von der jeweiligen Anregungsfrequenz erfasst. Aus dem Beschleunigungssignal a bei einer bestimmten Anregungsfrequenz und aus der zur Anregung benötigten Kraft F bei derselben Anregungsfrequenz kann die Akzeleranz a/F berechnet werden. Die Akzeleranz kann ein Hinweis auf die Fahrstabilität des Zweirades liefern. Weiterhin wird eine Resonanzfrequenz des Zweirades ermittelt. Beispielsweise kann die Resonanzfrequenz über die Akzeleranz ermittelt werden. Die Resonanzfrequenz kann der Anregungsfrequenz entsprechen, bei der die Akzeleranz ein Maximum aufweist, also die Anregungsfrequenz, bei der die zur Anregung benötigte Kraft F minimal wird. Weiterhin kann die Resonanzfrequenz auch über eine Phasenverschiebung zwischen der sinusförmigen Anregung und der Schwingungsantwort ermittelt werden. Die Resonanzfrequenz entspricht den Anregungsfrequenzen, bei denen eine Phasenverschiebung von 90° bzw. 270° zwischen der Schwingungsantwort und der sinusförmigen Anregung auftritt. Die Resonanzfrequenz sowie die Akzeleranz geben Hinweise auf die Fahrstabilität des Zweirades. Insbesondere können Referenzwerte hinterlegt sein, bei denen es zu einem Lenkerflattern des Zweirades kommt. Über die Akzeleranz und die Resonanzfrequenz können somit Vorhersagen beispielsweise für ein Fahrradmodell getroffen werden, ob es bei dem Modell zu Lenkerflattern oder Ähnlichem kommt. Durch Beladung des Fahrrades, beispielsweise mit Gewichten auf dem Gepäckträger kann das Verhalten des Fahrrades im beladenen Zustand erfasst werden. Insbesondere kann der Einfluss des Fahrers durch eine Zuladung von ca. 5 kg auf dem Gepäckträger simuliert werden.

**In** einer Ausführungsform des Verfahrens wird ein Maximum der Akzeleranz in einem Anregungsfrequenzbereich ermittelt, wobei die Anregungsfrequenz, bei der die Akzeleranz ein Maximum hat, der Resonanzfrequenz des Zweirades entspricht. Beispielsweise mittels eines *Shakers* kann ein Zweirad, insbesondere ein Fahrrad, zu Schwingungen angeregt werden. Die Kraft, die zur Anregung des Zweirades benötigt wird, wird beispielsweise mittels einer Messdose oder einem ähnlichen Kraftsensor für jede Anregungsfrequenz erfasst. Die Anregungsfrequenz, bei der die zur Anregung benötigte Kraft F minimal wird, also die Anregungsfrequenz, bei der die Akzeleranz a/F maximal wird, entspricht der Resonanzfrequenz des Zweirades. Durch die Berechnung über die Akzeleranz ist eine besonders einfache Bestimmung der Resonanzfrequenz möglich. Zur Auswertung können hierbei Auswerteeinrichtungen, wie beispielsweise ein Leistungsverstärker oder ein Echtzeitanalysator zum Einsatz kommen.

**In** einer Ausführungsform des Verfahrens wird eine Phasenverschiebung zwischen der Anregung und der Schwingungsantwort ermittelt, wobei die Anregungsfrequenz bei der die Phasenverschiebung einen bestimmten Wert aufweist, der Resonanzfrequenz des Zweirades entspricht. Bei einer Phasenverschiebung zwischen der insbesondere sinusförmigen Anregung des Zweirades und Schwingungsantwort des Zweirades von 90° bzw. 270° entspricht die Anregungsfrequenz der Resonanzfrequenz des Zweirades. Zur Auswertung der Phasengänge kann beispielsweise eine Fast-Fourier-Transformation (FFT) zum Einsatz kommen. Entsprechend kann bei der Resonanzfrequenz die Akzeleranz bestimmt werden, indem die Resonanzfrequenz gezielt mit der Vibrationsvorrichtung, insbesondere mit einem Exzenter, angesteuert wird, das Zweirad also mit der Resonanzfrequenz angeregt wird, und die zur Anregung benötigte Kraft und die entsprechende Beschleunigung gemessen wird.

**In** einer Ausführungsform des Verfahrens erfolgt die Anregung des Zweirades quer zur Längserstreckung des Zweirades. Beispielsweise kann das Zweirad, insbesondere das Fahrrad, mit einer Stößelstange zu Schwingungen angeregt werden. Diese Stößelstange kann insbesondere senkrecht zu der durch den Fahrradrahmen aufgespannten Ebene angeordnet sein. Das Zweirad wird somit quer zur Fahrtrichtung des Rades zu Schwingungen angeregt.

In einer Ausführungsform des Verfahrens erfolgt die Anregung des Zweirades mittels Sinusschwingungen, die Anregungsfrequenzen der Sinusschwingungen werden in einem Frequenzsweep durchfahren und der Frequenzsweep wird von großen zu kleinen Frequenzen hin durchgefahren und anschließend wird der Frequenzsweep von kleinen zu großen Frequenzen durchfahren. In einem Frequenzsweep wird ein Anregungsfrequenzbereich durchfahren, das Zweirad also nacheinander mit Anregungsfrequenzen aufsteigender bzw. absteigender Frequenz angeregt. Insbesondere wird das Zweirad mit allen Frequenzen nacheinander angeregt, wobei der Frequenzabstand vorbestimmt ist. Durch das Durchfahren eines Frequenzsweeps ist sichergestellt, dass alle notwendigen Frequenzen angesteuert werden, um die Resonanzfrequenz des Zweirades zu ermitteln.

Vorteilhafterweise wird der Anregungsfrequenzbereich von großen Frequenzwerten zu kleinen Frequenzwerten hin und anschließend in umgekehrter Richtung durchgefahren und das Zweirad entsprechend angeregt. Der Frequenzbereich der mutmaßlichen Resonanzfrequenz kann anschließend genauer, insbesondere langsamer, untersucht werden. Der Frequenzbereich kann insbesondere von 0-20 Hz gewählt werden.

In einer Ausführungsform der Erfindung wird das Zweirad mittels mindestens einer Vibrationsvorrichtung zum Schwingen angeregt und bei der Vibrationsvorrichtung handelt es sich um einen *Shaker* und/oder einen Exzenter. Durch die Verwendung von einem *Shaker* bzw. einem Exzenter ist eine einfache Schwingungsanregung des Zweirades quer zur Bewegungsrichtung des Zweirades ermöglicht.

In einer Ausführungsform des Verfahrens wird die Fahrstabilität des Zweirades durch einen Abgleich der Resonanzfrequenz mit einem vordefinierten Frequenzschwellwert bewertet. Beispielsweise können im Vorfeld Fahrversuche durchgeführt werden, so dass bekannt ist, dass beispielsweise unterhalb eines vordefinierten Schwellwertes liegende Resonanzfrequenzen auf ein eher instabiles Fahrverhalten des Zweirades hindeuten als oberhalb eines Schwellwertes liegende Resonanzfrequenzen. **In** einer Weiterbildung des Verfahrens wird bei Unterschreitung eines ersten vordefinierten Frequenzschwellwertes durch die ermittelte Resonanzfrequenz auf ein instabiles Fahrverhalten des Zweirades geschlossen, bei Ermittlung einer Resonanzfrequenz zwischen einem ersten und einem zweiten vordefinierten Frequenzschwellwertes wird auf ein grenzstabiles Fahrverhalten des Zweirades geschlossen, wobei der erste Frequenzschwellwert einen niedrigeren Frequenzwert aufweist als der zweite Frequenzschwellwert. Beispielsweise kann es sich bei dem ersten Frequenzschwellwert um eine Frequenz von 8 Hz handeln, während es sich bei dem zweiten Frequenzschwellwert um eine Frequenz von 9 Hz handelt. Unterhalb eines Schwellwertes von 8 Hz kann die ermittelte Resonanzfrequenz einem instabilen Fahrverhalten zugeordnet werden, bei dem ein Auftreten von Lenkerflattern wahrscheinlich ist. Zwischen dem ersten und dem zweiten Schwellwert wird von einem grenzstabilen Fahrverhalten ausgegangen, bei dem ein Lenkerflattern mit geringerer Wahrscheinlichkeit auftreten kann.

**In** einer Ausführungsform des Verfahrens wird bei Überschreiten eines vordefinierten Schwellwertes durch die erfasste Resonanzfrequenz auf ein stabiles Fahrverhalten des Zweirades geschlossen. Beispielsweise bei Überschreitung des zweiten Schwellwertes, also bei Überschreitung des Resonanzfrequenzwertes von 9 Hz kann von einem stabilen Fahrverhalten des Zweirades ausgegangen werden, bei dem es mit nur sehr geringer Wahrscheinlichkeit zu Lenkerflattern kommt.

**In** einer Ausführungsform des Verfahrens wurden die Frequenzschwellwerte im Vorfeld empirisch ermittelt. Zur Ermittlung der Frequenzschwellwerte können beispielsweise Fahrversuche oder Ähnliches im Vorfeld herangezogen werden.

Ein weiterer Aspekt der Erfindung betrifft eine Vorrichtung zur Bestimmung der Fahrstabilität eines Zweirades, insbesondere zur Bestimmung der Möglichkeit des Auftretens von Lenkerflattern bei dem Zweirad, wobei das Zweirad mindestens ein Steuerrohr aufweist, durch das die Lenkachse des Vorderades verläuft, wobei die Vorrichtung mindestens eine Vibrationsvorrichtung zur Erzeugung von Schwingungen aufweist, wobei die Vibrationsvorrichtung eine schwingungsübertragende Verbindung zu dem Steuerrohr des Zweirades aufweist, wobei die Vibrationsvorrichtung mindestens eine Krafterfassungsvorrichtung zur Erfassung der zur Schwingungsanregung des Zweirades benötigten Kraft in Abhängigkeit von der jeweiligen Anregungsfrequenz aufweist, wobei die Vorrichtung mit mindestens einem Beschleunigungssensor zur Erfassung einer jeweiligen Schwingungsantwort des Zweirades in Form mindestens eines Beschleunigungssignals in Abhängigkeit von der jeweiligen Anregungsfrequenz an mindestens einem Bereich des Zweirades signalleitend verbunden ist, wobei die Vorrichtung mindestens eine Auswerteeinrichtung zur Auswertung der erfassten Beschleunigungssignalen und der zur Anregung des Zweirades benötigten Kraft zur Ermittlung der Akzeleranz bei der jeweiligen Anregungsfrequenz und zur Übermittlung einer Resonanzfrequenz des Zweirades aufweist und wobei die Auswerteeinrichtung zur Bestimmung der Fahrstabilität aus der Resonanzfrequenz und der zugehörigen Akzeleranz ausgebildet ist.

Die Vorrichtung ist insbesondere zur Durchführung des Verfahrens nach einem der vorhergehenden Ausführungsformen ausgebildet. Die Vorrichtung weist zur Erzeugung von Schwingungen mindestens eine Vibrationsvorrichtung, insbesondere einen *Shaker* oder einen Exzenter auf. Zur Übertragung der erzeugten Schwingungen weist die Vibrationsvorrichtung eine schwingungsübertragende Verbindung zu dem Steuerrohr des Zweirades auf. Die schwingungsübertragende Verbindung kann beispielsweise durch eine Stößelstange oder ein ähnliches Gestänge ausgebildet sein. Die Stößelstange kann beispielsweise durch eine Rohrschelle oder Ähnliches mit dem Steuerrohr verbunden sein. Zur Erfassung der zur Schwingungsanregung des Zweirades benötigten Kraft weist die Vibrationsvorrichtung eine Krafterfassungsvorrichtung auf. Bei der Krafterfassungsvorrichtung kann es sich beispielsweise um eine Kraftmessdose oder einen ähnlichen Kraftsensor handeln. Hierbei ist die Krafterfassungsvorrichtung an der der Vibrationsvorrichtung zugewandten Seite der Stößelstange angeordnet. Weiterhin weist die Vorrichtung Beschleunigungssensoren, insbesondere piezoelektrische Sensoren auf, mit denen die Schwingungsantwort des Zweirades in Form von Beschleunigungssignalen erfasst werden kann. Hierzu sind die Beschleunigungssensoren an dem Zweirad, beispielsweise am Steuerrohr, am Lenker und am Gepäckträger, angeordnet. Die Beschleunigungssensoren sind signalleitend, beispielsweise über Kabelverbindungen oder andere datenleitende Verbindungen, mit einer Auswerteeinrichtung zur Auswertung und Erfassung der Beschleunigungswerte verbunden. Durch die Anregung des Zweirades zu Schwingungen über die Vibrationsvorrichtung und das Erfassen der zur Anregung benötigten Kraft über die Krafterfassungsvorrichtung sowie die Erfassung der Schwingungsantwort des Zweirades in Form von Beschleunigungssignalen mittels Beschleunigungssensoren lässt sich die Fahrstabilität des Zweirades vorhersagen.

Bei Auswerteeinrichtungen kann es sich beispielsweise um einen Echtzeitanalysator in Verbindung mit einem Leistungsverstärker, einer Recheneinheit wie einem Computer oder Ähnlichem handeln. Zur Auswertung kann beispielsweise eine Fast-Fourier-Transformation zur Verwendung kommen.

In einer Ausbildungsform der Vorrichtung handelt es sich bei der Vibrationsvorrichtung um einen *Shaker* oder einen Exzenter. Bei der Vibrationsvorrichtung kann es sich beispielsweise um einen *Shaker* oder einen Exzenter handeln, mit dem, beispielsweise über eine gelenkig gelagerte Stößelstange, die Vibrationen, also die Schwingungen, auf das Steuerrohr des Zweirades übertragen werden.

In einer bevorzugten Ausführungsform der Erfindung weist die Vorrichtung ein Aufhängungsgestell auf und die Vibrationsvorrichtung ist höhenverstellbar und frei schwingend an dem Aufhängungsgestell aufgehängt und die Pendelfrequenz der frei schwingend aufgehängten Vibrationsvorrichtung liegt deutlich unterhalb der zu messenden Schwingungen. Das Aufhängungsgestell kann beispielsweise galgenförmig oder rahmenförmig ausgebildet sein. Das Aufhängungsgestell kann eine Aufhängung für die Vibrationsvorrichtung aufweisen, wobei die Aufhängung beispielsweise durch ein Seilzugsystem oder Ähnliches ausgebildet sein kann. Die Vibrationsvorrichtung weist somit eine seismische Aufhängung auf, um unerwünschte Kraftspitzen abzubauen und dadurch Messfehler zu vermeiden. Durch die Aufhängung ist die Vibrationsvorrichtung höhenverstellbar ausgebildet, so dass die Vibrationsvorrichtung in ihrer Höhe genau an die erforderlichen Gegebenheiten angepasst werden kann. Insbesondere kann die Vibrationsvorrichtung in einer Höhe zum Steuerkopflager des Zweirades ausgerichtet werden, so dass die Schwingungen von der Vibrationsvorrichtung über eine gelenkige Stößelstange auf das Zweirad übertragen werden können. Die Vibrationsvorrichtung ist hierbei frei schwingend aufgehängt.

Die Aufhängung, beispielsweise über ein Seilzugsystem, der Vibrationsvorrichtung ist in ihrer Länge so ausgebildet, dass die Pendelfrequenz der Vibrationsvorrichtung deutlich unterhalb der zu messenden bzw. der zu übertragenden Schwingungen liegt. Durch die Übertragung der Schwingungen von der Vibrationsvorrichtung auf das Zweirad wird die Lage der Vibrationsvorrichtung somit nahezu nicht verändert. In einer Ausführungsform der Erfindung ist die Vibrationsvorrichtung über eine Stößelstange schwingungsübertragend mit dem Steuerrohr des Zweirades verbunden. Die Stößelstange kann gestängeartig ausgebildet sein und beispielsweise mit einer Rohrschelle oder Ähnlichem am Steuerrohr, insbesondere unterhalb der Lenkkopflagerschale des Zweirades, angeschlossen sein. Die Stößelstange kann hierbei an ihrem der Vibrationsvorrichtung zugewandten Ende und ihrem dem Steuerrohr zugewandten Ende gelenkig gelagert sein. Hierdurch können gegebenenfalls Höhenunterschiede oder Ähnliches ausgeglichen werden. Durch die Stößelstange werden Schwingungen der Vibrationsvorrichtung senkrecht zur vom Rahmen des Zweirades aufgespannten Ebene auf das Zweirad übertragen. Zur Erfassung der hierzu benötigten Kraft kann an der der Vibrationsvorrichtung zugewandten Seite der Stößelstange beispielsweise eine Kraftmessdose angeschlossen sein.

In einer Weiterbildung der Erfindung ist mindestens ein Beschleunigungssensor an dem Lenker des Zweirades und/oder an dem Gepäckträger des Zweirades und/oder an dem Steuerrohr des Zweirades angeordnet. Als Beschleunigungssensoren können beispielsweise piezoelektrische Elemente zum Einsatz kommen. Diese können auf einfache Art und Weise zur Aufnahme einer Schwingungsantwort des Zweirades, beispielsweise am Lenker des Zweirades, am Gepäckträger und am Steuerrohr, beispielsweise durch Klebeverbindungen verbunden werden.

Im Folgenden wird die Erfindung anhand eines in der Zeichnung dargestellten Ausführungsbeispiels näher erläutert. Im Einzelnen zeigen die schematischen Darstellungen in:
- Fig. 1:: eine erfindungsgemäße Vorrichtung mit einer Vibrationsvorrichtung und einem Zweirad in einer perspektivischen Darstellung;
- Fig. 2:: eine Vorrichtung gemäß Fig. 1 in einer Seitenansicht;
- Fig. 3:: eine Vorrichtung gemäß Fig. 1 in einer Frontansicht;
- Fig. 4:: eine Vorrichtung gemäß Fig. 1 in einer Draufsicht; und
- Fig. 5:: eine Detailansicht einer Vibrationsvorrichtung.

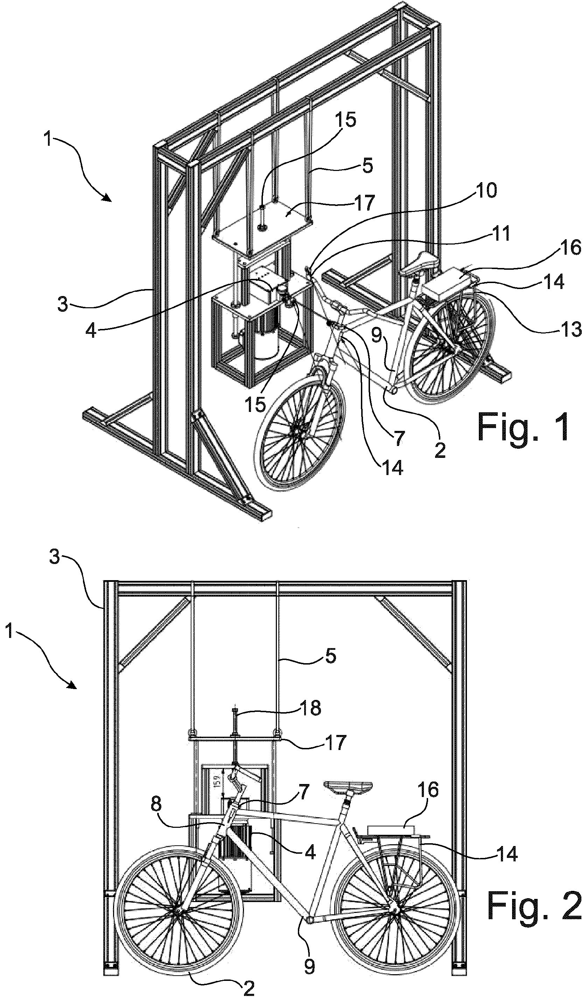

In Fig. 1 ist eine Vorrichtung 1 zur Erfassung des Lenkerflatterns bei einem Fahrrad 2 dargestellt. Die Vorrichtung 1 weist ein Aufhängungsgestell 3 auf, an dem eine Vibrationsvorrichtung 4 frei schwingend über eine Aufhängung 5 aufgehängt ist. Die Aufhängung 5 ist hierbei durch ein Zugseilsystem ausgebildet. Die Vibrationsvorrichtung 4 ist mittels einer Stößelstange 6 schwingungsübertragend mit dem Fahrrad 2 verbunden. Insbesondere weist die Stößelstange 6 an ihrer dem Fahrrad 2 zugewandten Seite eine Schelle 7 auf, mit der die Stößelstange 6 mit dem Steuerrohr 8 des Fahrradrahmens 9 verbunden ist. Die Stößelstange 6 ist hierbei im Bereich des oberen Teils des Steuersatzes des Fahrrades 2, also im oberen Bereich des Steuerrohrs 8 angeordnet. Weiterhin weist die Vorrichtung 1 drei Beschleunigungssensoren auf, von denen ein Beschleunigungssensor 10 mit dem Lenkerende 11 verbunden ist. Ein weiterer Beschleunigungssensor 12 ist mit dem Gepäckträger 13 verbunden und ein dritter Beschleunigungssensor 14 ist mit dem Steuerrohr 8 verbunden. An dem der Vibrationsvorrichtung 4 zugewandten Seite der Stößelstange 6 ist eine Krafterfassungsvorrichtung, hier eine Kraftmessdose 15, angeordnet. Für den Gepäckträger 13 des Fahrrades 2 kann ein Zusatzgewicht 16 vorgesehen sein, mit dem eine Beladung des Fahrrades simuliert werden kann. Die Vibrationsvorrichtung 4 mit der Stößelstange 6 wird so neben dem Fahrradrahmen 9 platziert, dass die Stößelstange 6 im Wesentlichen senkrecht zur von dem Fahrradrahmen 9 aufgespannten Ebene angeordnet ist. Durch die Vibrationsvorrichtung 4 wird das Fahrrad 2 an dem Steuerrohr 8 quer zur Bewegungsrichtung des Fahrrades zu Schwingungen angeregt. Die Schwingungsantworten des Fahrrades 2 werden durch die Beschleunigungssensoren 10, 12, 14 in Form von Beschleunigungssignalen erfasst. Die zur Anregung des Fahrrades 2 benötigte Kraft wird mittels der Krafterfassungsvorrichtung 15 erfasst. Aus den Beschleunigungsmesswerten sowie der benötigten Kraft lässt sich mittels des erfindungsgemäßen Verfahrens die Akzeleranz (a/F) sowie die Resonanzfrequenz des Fahrrades 2 ermitteln. Hieraus lassen sich Aussagen über die Fahrstabilität des Fahrrades 2 treffen. Durch die Aufhängung 5 der Vibrationsvorrichtung 4 an dem Aufhängungsgestell 3 lässt sich die Höhe der Vibrationsvorrichtung 4 genau einstellen, so dass eine optimale Schwingungsübertragung von der Vibrationsvorrichtung 4 mittels der Stößelstange 6 auf das Fahrrad 2 gegeben ist.

In Fig. 2 ist die Vorrichtung 1 gemäß Fig. 1 in einer Seitendarstellung dargestellt. Gleiche Bauteile sind mit gleichen Bezugszeichen versehen.

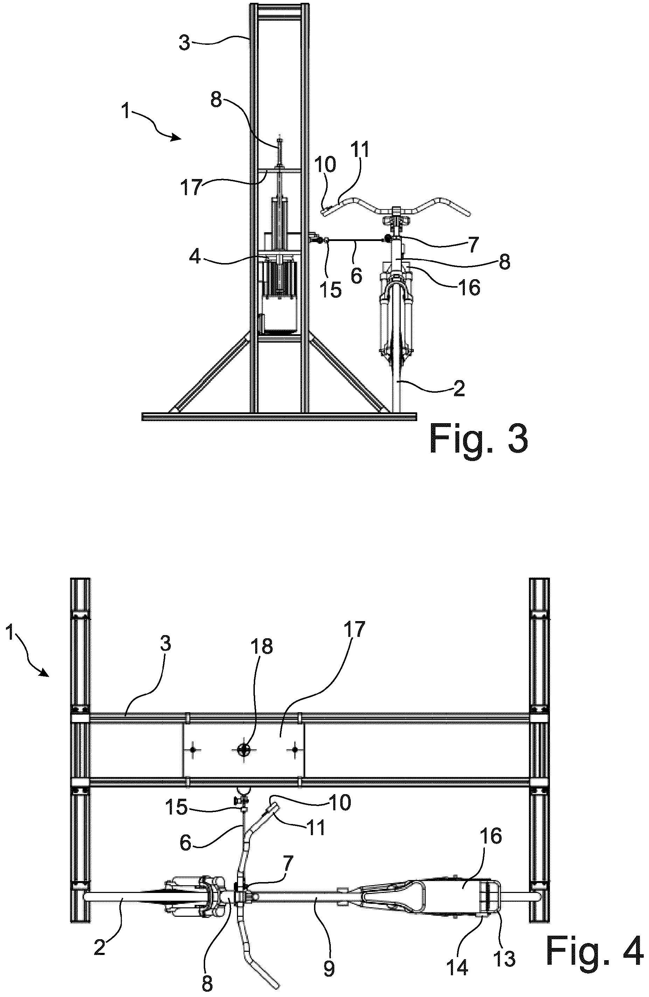

In Fig. 3 ist die Vorrichtung 1 gemäß Fig. 1 in einer Frontansicht dargestellt. Gleiche Bauteile sind mit gleichen Bezugszeichen versehen. Die Stößelstange 6 ist im Wesentlichen waagerecht ausgerichtet, so dass eine optimale Schwingungsübertragung auf das Steuerrohr 8 des Fahrradrahmens 9 erfolgen kann.

In Fig. 4 ist die erfindungsgemäße Vorrichtung 1 gemäß den Fig. 1 bis 3 in einer Draufsicht dargestellt. Gleiche Bauteile sind mit gleichen Bezugszeichen versehen.

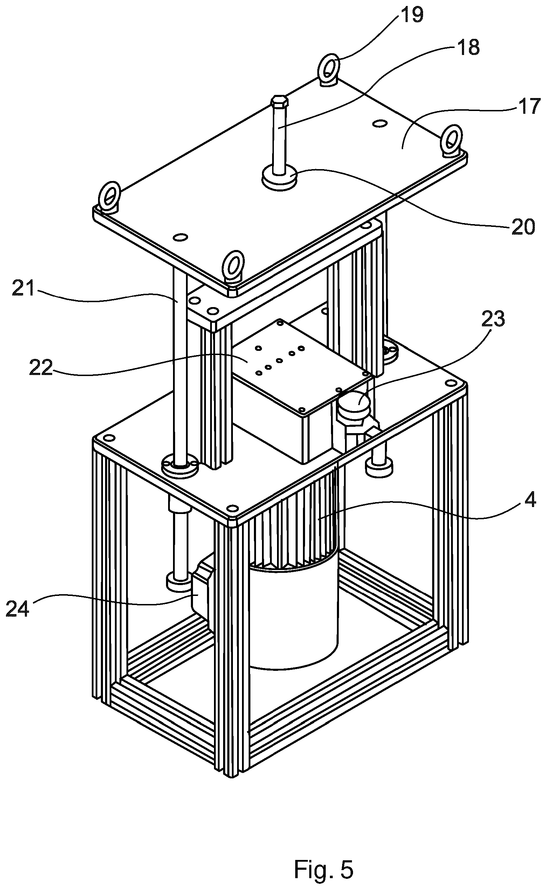

In Fig. 5 ist eine Vibrationsvorrichtung 4 dargestellt. Um eine genaue Höheneinstellung der Vibrationsvorrichtung 4 und der daran angeschlossenen Stößelstange 6 zu erreichen, weist die Vibrationsvorrichtung 4 eine Trägerplatte 17 zur Aufnahme der Aufhängung 5 auf. Über eine Gewindespindel 18 ist der Abstand zwischen der Trägerplatte 17 und der Vibrationsvorrichtung 4 einstellbar, so ist eine genaue Höheneinstellbarkeit gegeben. Die Trägerplatte 17 weist Augenschrauben 19 zur Aufhängung an dem Aufhängegestell 3 auf. Die Gewindespindel weist zur Einstellung ein Muttergewinde mit Kontermutter auf. Hierzu sind auch Linearführungen 21 angeordnet. Die Vibrationsvorrichtung 4 weist ein Exzentergehäuse 22 auf.

Zur Hubeinstellung des Exzenters ist eine Messuhr 23 vorgesehen. Der Antrieb des Exzenters erfolgt über einen Elektromotor 24.

## Patentansprüche

1. Verfahren zur Bestimmung der Fahrstabilität eines Zweirades (2), insbesondere eines Fahrrades, insbesondere zur Bestimmung der Möglichkeit des Auftretens von Lenkerflattern bei dem Zweirad (2), wobei das Zweirad (2) mindestens ein Steuerrohr (8) aufweist, durch das die Lenkachse des Vorderades verläuft,
**dadurch gekennzeichnet,**
**dass** das Steuerrohr (8) des Zweirades (2) mit Anregungsfrequenzen eines Anregungsfrequenzbereiches zu Schwingungen angeregt wird,
**dass** eine zur Anregung des Zweirades (2) benötigte Kraft in Abhängigkeit von der jeweiligen Anregungsfrequenz erfasst wird,
**dass** eine jeweilige Schwingungsantwort des Zweirades (2) in Form mindestens eines Beschleunigungssignals in Abhängigkeit von der jeweiligen Anregungsfrequenz an mindestens einem Bereich des Zweirades (2) erfasst wird,
**dass** aus den erfassten Beschleunigungssignalen und der zur Anregung des Zweirades (2) benötigten Kraft auf die Akzeleranz bei der jeweiligen Anregungsfrequenz geschlossen wird,
**dass** mindestens eine Resonanzfrequenz des Zweirades (2) ermittelt wird, und
**dass** aus der mindesten einen Resonanzfrequenz und der zugehörigen Akzeleranz auf die Fahrstabilität des Zweirades (2) geschlossen wird.

2. Verfahren nach Anspruch 1, **dadurch gekennzeichnet, dass** ein Maximum der Akzeleranz in einem Anregungsfrequenzbereich ermittelt wird, wobei die Anregungsfrequenz bei der die Akzeleranz ein Maximum hat der Resonanzfrequenz des Zweirades (2) entspricht.

3. Verfahren nach Anspruch 1, **dadurch gekennzeichnet, dass** eine Phasenverschiebung zwischen der Anregung und der Schwingungsantwort ermittelt wird, wobei die Anregungsfrequenz bei der die Phasenverschiebung einen bestimmten Wert aufweist, der der Resonanzfrequenz des Zweirades (2) entspricht.

4. Verfahren nach einem der Ansprüche 1 bis 3, **dadurch gekennzeichnet, dass** die Anregung des Zweirades (2) quer zur Längserstreckung des Zweirades (2) erfolgt.

5. Verfahren nach einem der Ansprüche 1 bis 4, **dadurch gekennzeichnet, dass** die Anregung des Zweirades (2) mittels Sinusschwingungen erfolgt, dass die Anregungsfrequenzen der Sinusschwingungen in einem Frequenzsweep durchfahren werden, dass der Frequenzsweep von großen zu kleinen Frequenzen hin durchfahren wird und dass der Frequenzsweep anschließend von kleinen zu großen Frequenzen durchfahren wird.

6. Verfahren nach einen der Ansprüche 1 bis 5, **dadurch gekennzeichnet, dass** das Zweirad (2) mittels mindestens einer Vibrationsvorrichtung (4) zum Schwingen angeregt wird und dass es sich bei der Vibrationsvorrichtung (4) um einen Shaker und/oder einen Exzenter handelt.

7. Verfahren nach einen der Ansprüche 1 bis 6, **dadurch gekennzeichnet, dass** die Fahrstabilität des Zweirades (2) durch einen Abgleich der Resonanzfrequenz mit einem vordefinierten Frequenzschwellwert bewertet wird.

8. Verfahren nach Anspruch 7, **dadurch gekennzeichnet, dass** bei Unterschreitung eines ersten vordefinierten Frequenzschwellwertes durch die ermittelte Resonanzfrequenz auf ein instabiles Fahrverhalten des Zweirades (2) geschlossen wird, dass bei Ermittlung einer Resonanzfrequenz zwischen einem ersten und einem zweiten vordefinierten Frequenzschwellwertes auf ein grenzstabiles Fahrverhalten des Zweirades (2) geschlossen wird, wobei der erste Frequenzschwellwert einen niedrigeren Frequenzwert aufweist als der zweite Frequenzschwellwert.

9. Verfahren nach Anspruch 7 oder 8, **dadurch gekennzeichnet, dass** bei Überschreiten eines vordefinierten Frequenzschwellwertes durch die erfasste Resonanzfrequenz auf ein stabiles Fahrverhalten des Zweirades (2) geschlossen wird.

10. Verfahren nach Anspruch 7 bis 9, **dadurch gekennzeichnet, dass** die Frequenzschwellwerte im Vorfeld empirisch ermittelt wurden

11. Vorrichtung zur Bestimmung der Fahrstabilität eines Zweirades (2), insbesondere eines Fahrrades, insbesondere zur Bestimmung der Möglichkeit des Auftretens von Lenkerflattern bei dem Zweirad (2), wobei das Zweirad (2) mindestens ein Steuerrohr (8) aufweist, durch das die Lenkachse des Vorderades verläuft,
wobei die Vorrichtung (1) mindestens eine Vibrationsvorrichtung (4) zur Erzeugung von Schwingungen aufweist,
wobei die Vibrationsvorrichtung (4) eine schwingungsübertragende Verbindung zu dem Steuerrohr (8) des Zweirades (2) aufweist,
wobei die Vibrationsvorrichtung (4) mindestens eine Krafterfassungsvorrichtung (15) zur Erfassung der zur Schwingungsanregung des Zweirades (2) benötigten Kraft in Abhängigkeit von der jeweiligen Anregungsfrequenz aufweist,
wobei die Vorrichtung (1) mit mindestens einem Beschleunigungssensor (10, 12, 14) zur Erfassung einer jeweiligen Schwingungsantwort des Zweirades (2) in Form mindestens eines Beschleunigungssignals in Abhängigkeit von der jeweiligen Anregungsfrequenz an mindestens einem Bereich des Zweirades (2) signalleitend verbunden ist,
wobei die Vorrichtung (1) mindestens eine Auswerteeinrichtung zur Auswertung der erfassten Beschleunigungssignalen und der zur Anregung des Zweirades (2) benötigten Kraft zur Ermittlung der Akzeleranz bei der jeweiligen Anregungsfrequenz und zur Ermittlung einer Resonanzfrequenz des Zweirades aufweist, und wobei die Auswerteeinrichtung zur Bestimmung der Fahrstabilität aus der Resonanzfrequenz und der zugehörigen Akzeleranz ausgebildet ist.

12. Vorrichtung nach einem Anspruch 11, **dadurch gekennzeichnet, dass** die Vorrichtung (1) ein Aufhängungsgestell (3) aufweist und dass die Vibrationsvorrichtung (4) höhenverstellbar und frei schwingend an dem Aufhängungsgestell (3) aufgehängt ist und dass die Pendelfrequenz der frei schwingend aufgehängten Vibrationsvorrichtung (4) deutlich unterhalb der zu messenden Schwingung liegt.

13. Vorrichtung nach einem der Ansprüche 11 bis 12, **dadurch gekennzeichnet, dass** die Vibrationsvorrichtung (4) über eine Stößelstange (6) schwingungsübertragend mit dem Steuerrohr (8) des Zweirades (2) verbunden ist.

14. Vorrichtung nach einem der Ansprüche 11 bis 13, **dadurch gekennzeichnet, dass** mindestens ein Beschleunigungssensor (10, 12, 14) an dem Lenker (11) des Zweirades (2) und/oder an dem Gepäckträger (13) des Zweirades (2) und/oder an dem Steuerrohr (8) des Zweirades (2) angeordnet ist

## Claims

1. Method for determining the driving stability of a two-wheeled vehicle (2), in particular a bicycle, in particular for determining the possibility of the occurrence of handlebar shimmy in the two-wheeled vehicle (2), wherein the two-wheeled vehicle (2) has at least one head tube (8) through which the steering axis of the front wheel runs,
**characterized in that**
the head tube (8) of the two-wheeled vehicle (2) is caused to vibrate with excitation frequencies of an excitation frequency range,
that a force required to excite the two-wheeled vehicle (2) is detected as a function of the respective excitation frequency,
that a respective vibration response of the two-wheeled vehicle (2) is detected in at least one area of the two-wheeled vehicle (2) in the form of at least one acceleration signal as a function of the respective excitation frequency,
that the accelerance at the respective excitation frequency is concluded from the detected acceleration signals and the force required to excite the two-wheeled vehicle (2),
that at least one resonance frequency of the two-wheeled vehicle (2) is determined, and
that the driving stability of the two-wheeled vehicle (2) is concluded from the at least one resonance frequency and the associated accelerance.

2. Method according to Claim 1, **characterized in that** a maximum of the accelerance in one excitation frequency range is determined, wherein the excitation frequency, at which the accelerance has a maximum, corresponds to the resonance frequency of the two-wheeled vehicle (2).

3. Method according to Claim 1, **characterized in that** a phase shift between the excitation and the vibration response is determined, wherein the excitation frequency, at which the phase shift has a certain value, corresponds to the resonance frequency of the two-wheeled vehicle (2).

4. Method according to one of claims 1 to 3, **characterized in that** the excitation of the two-wheeled vehicle (2) is carried out transverse to the longitudinal extension of the two-wheeled vehicle (2).

5. Method according to one of claims 1 to 4, **characterized in that** the excitation of the two-wheeled vehicle (2) is carried out by means of sine waves, that a frequency sweep passes through the excitation frequencies of the sine waves, that the frequency sweep passes through from high to low frequencies, and that the frequency sweep subsequently passes through from low to high frequencies.

6. Method according to one of claims 1 to 5, **characterized in that** the two-wheeled vehicle (2) is caused to vibrate by means of at least one vibration device (4), and that the vibration device (4) is a shaker and/or an eccentric.

7. Method according to one of claims 1 to 6, **characterized in that** the driving stability of the two-wheeled vehicle (2) is evaluated by comparing the resonance frequency with a predefined frequency threshold value.

8. Method according to Claim 7, **characterized in that**, upon the determined resonance frequency underrunning a first, predefined frequency threshold value, an unstable driving stability of the two-wheeled vehicle (2) is concluded, that upon a resonance frequency being determined that is between a first and a second predefined frequency threshold value, a borderline stable driving stability of the two-wheeled vehicle (2) is concluded, wherein the first frequency threshold value has a lower frequency value than the second frequency threshold value.

9. Method according to Claim 7 or 8, **characterized in that**, upon the detected resonance frequency exceeding a predefined frequency threshold value, a stable driving stability of the two-wheeled vehicle (2) is concluded.

10. Method according to claims 7 to 9, **characterized in that** the frequency threshold values have been empirically determined in advance.

11. Device for determining the driving stability of a two-wheeled vehicle (2), in particular a bicycle, in particular for determining the possibility of the occurrence of handlebar shimmy in the two-wheeled vehicle (2), wherein the two-wheeled vehicle (2) has at least one head tube (8) through which the steering axis of the front wheel runs,
wherein the device (1) has a least one vibration device (4) for generating vibrations,
wherein the vibration device (4) has a connection for transferring vibrations to the head tube (8) of the two-wheeled vehicle (2),
wherein the vibration device (4) has at least one force detection device (15) for detecting the force required to cause vibrations in the two-wheeled vehicle (2) as a function of the respective excitation frequency,
wherein the device (1) is connected in a signal-conducting way to at least one acceleration sensor (10, 12, 14) for detecting a respective vibration response of the two-wheeled vehicle (2) in the form of at least one acceleration signal as a function of the respective excitation frequency in at least one area of the two-wheeled vehicle (2),
wherein the device (1) has at least one evaluation unit for evaluating the detected acceleration signals and the force required to excite the two-wheeled vehicle (2) for determining the accelerance at the respective excitation frequency and for determining a resonance frequency of the two-wheeled vehicle, and wherein the evaluation unit is designed to determine the driving stability from the resonance frequency and the associated accelerance.

12. Device according to a Claim 11, **characterized in that** the device (1) has a suspension frame (3), and that the vibration device (4) is height-adjustable and is suspended in a freely vibrating way on the suspension frame (3), and that the pendulum frequency of the freely-vibrating vibration device (4) is significantly below the vibrations to be measured.

13. Device according to one of claims 11 to 12, **characterized in that** the vibration device (4) is connected via a push-rod (6) to the head tube (8) of the two-wheeled vehicle (2) in a vibration-transferring way.

14. Device according to one of claims 11 to 13, **characterized in that** at least one acceleration sensor (10, 12, 14) is arranged on the handlebars (11) of the two-wheeled vehicle (2) and/or on the rear rack (13) of the two-wheeled vehicle (2) and/or on the head tube (8) of the two-wheeled vehicle (2).

## Revendications

1. Procédé de détermination de la stabilité de conduite d'un deux roues (2), en particulier d'une bicyclette, en particulier de détermination de la possibilité de l'apparition de flottements du guidon sur le deux roues (2), sachant que le deux roues (2) comporte au moins un tube de direction (8) à travers lequel passe l'axe de direction de la roue avant,
***caractérisé***
***en ce que*** le tube de direction (8) du deux roues (2) est stimulé en vibrations avec des fréquences d'excitation d'une gamme de fréquences de stimulation,
***en ce* qu'**une force nécessaire à l'excitation du deux roues (2) est saisie en fonction de la fréquence d'excitation respective,
***en ce* qu'**une réponse aux vibrations respective du deux roues (2) est saisie sous la forme d'au moins un signal d'accélération en fonction de la fréquence d'excitation respective sur au moins une zone du deux roues (2),
***en ce que*** l'on conclue à l'accélérance à la fréquence d'excitation respective à partir des signaux d'accélération saisis et de la force nécessaire à l'excitation du deux roues (2),
***en ce* qu'**au moins une fréquence de résonance du deux roues (2) est déterminée
et
***en ce que*** l'on conclue à la stabilité de conduite du deux roues (2) à partir d'au moins une fréquence de résonance et de l'accélérance associée .

2. Procédé selon la revendication 1, ***caractérisé en ce* qu'**un maximum de l'accélérance est déterminé dans une gamme de fréquences d'excitation, sachant que la fréquence d'excitation pour laquelle l'accélérance a un maximum, correspond à la fréquence de résonance du deux roues (2).

3. Procédé selon la revendication 1, ***caractérisé en ce* qu'**un déphasage est déterminé entre l'excitation et la réponse aux vibrations, sachant que la fréquence d'excitation pour laquelle le déphasage comporte une certaine valeur, qui correspond à la fréquence de résonance du deux roues (2).

4. Procédé selon l'une quelconque des revendications 1 à *3, **caractérisé en ce que*** l'excitation du deux roues (2) a lieu transversalement à l'extension longitudinale du deux roues (2).

5. Procédé selon l'une quelconque des revendications 1 à *4, **caractérisé en ce que*** l'excitation du deux roues (2) a lieu au moyen de vibrations sinusoïdales, ***en ce que*** les fréquences d'excitation des vibrations sinusoïdales sont traversées dans un balayage de fréquences, **en ce que** le balayage de fréquences est traversé en allant des grandes aux petites fréquences et ***en ce que*** le balayage de fréquences est traversé ensuite en allant des petites aux grandes fréquences.

6. Procédé selon l'une quelconque des revendications 1 à *5, **caractérisé en ce que*** le deux roues (2) est stimulé pour vibrer au moyen d'au moins un dispositif de vibrations (4) et ***en ce que*** concernant le dispositif de vibrations (4), il s'agit d'un système de secousse et/ou d'un système excentrique.

7. Procédé selon l'une quelconque des revendications 1 à *6, **caractérisé en ce que*** la stabilité de conduite du deux roues (2) est évaluée par une comparaison de la fréquence de résonance à une valeur de seuil de fréquence prédéfinie.

8. Procédé selon la revendication 7, ***caractérisé en ce qu'*** en cas de dépassement inférieur d'une première valeur de seuil de fréquence prédéfinie par la fréquence de résonance déterminée, il est conclu à un comportement de conduite instable du deux roues (2), ***en ce qu'**il* est conclu à un comportement de conduite stable limite du deux roues (2) lors de la détermination d'une fréquence de résonance entre une première et une deuxième valeur de seuil de fréquence prédéfinie, sachant que la première valeur de seuil de fréquence comporte une valeur de fréquence plus faible que la deuxième valeur de seuil de fréquence.

9. Procédé selon la revendication 7 ou 8, ***caractérisé en* ce *qu'***il est conclu à un comportement de conduite stable du deux roues (2) en cas de dépassement inférieur d'une valeur de seuil de conduite prédéfinie par la fréquence de résonance saisie.

10. Procédé selon l'une quelconque des revendications 7 à *9, **caractérisé en ce que*** les valeurs de seuil de fréquence ont été déterminées au préalable de façon empirique.

11. Dispositif de détermination de la stabilité de conduite d'un deux roues (2), en particulier d'une bicyclette, en particulier de détermination de la possibilité de l'apparition de flottements du guidon sur le deux roues (2), sachant que le deux roues (2) comporte au moins un tube de direction (8) à travers lequel passe l'axe de direction de la roue avant,
sachant que le dispositif (1) comporte au moins un dispositif de vibrations (4) pour générer des vibrations,
sachant que le dispositif de vibrations (4) comporte une liaison avec le tube de direction (8) du deux roues (2), transmettant les vibrations,
sachant que le dispositif de vibrations (4) comporte au moins un dispositif de saisie de force (15) pour saisir la force nécessaire à l'excitation de vibrations du deux roues (2) en fonction de la fréquence d'excitation respective,
sachant que le dispositif (1) est relié en conduction de signaux à au moins un capteur d'accélération (10, 12, 14) pour la saisie d'une réponse aux vibrations respective du deux roues (2) sous la forme d'au moins un signal d'accélération en fonction de la fréquence d'excitation respective sur au moins une zone du deux roues (2),
sachant que le dispositif (1) comporte au moins un système d'évaluation pour évaluer les signaux d'accélération saisis et la force nécessaire à l'excitation du deux roues (2) pour déterminer l'accélérance à la fréquence d'excitation respective et pour déterminer une fréquence de résonance du deux roues et sachant que le système d'évaluation est constitué pour déterminer la stabilité de conduite à partir de la fréquence de résonance et de l'accélérance associée.

12. Dispositif selon la revendication 11, ***caractérisé en ce que*** le dispositif (1) comporte un châssis de suspension (3) et ***en ce que*** le dispositif de vibrations (4) est suspendu réglable en hauteur et oscillant librement sur le châssis de suspension (3) et ***en ce que*** la fréquence de balancement du dispositif de vibrations (4) suspendu librement oscillant se situe nettement en dessous de la vibration à mesurer.

13. Dispositif selon l'une quelconque des revendications 11 à 12, ***caractérisé en ce que*** le dispositif de vibrations (4) est relié par le biais d'une tige de poussoir (6) en transmission de vibrations au tube de direction (8) du deux roues (2).

14. Dispositif selon l'une quelconque des revendications 11 à 13, ***caractérisé en ce* qu'**au moins un capteur d'accélération (10, 12, 14) est disposé sur le guidon (11) du deux roues (2) et/ou sur le porte-bagages (13) du deux roues (2) et/ou sur le tube de direction (8) du deux roues (2).
